# EUROPEAN PATENT SPECIFICATION

(11) **EP 3 374 661 B1**
(45) Date of publication and mention of the grant of the patent: **07.04.2021**
(21) Application number: 16793895.0
(22) Date of filing: 09.11.2016
(51) Int. Cl.: F16F 15/121, F16F 15/123

(54) **A VIBRATION DAMPENER FOR HYBRID VEHICLES**
SCHWINGUNGSDÄMPFER FÜR HYBRIDFAHRZEUGE
AMORTISSEUR DE VIBRATIONS DESTINÉ À DES VÉHICULES HYBRIDES

(30) Priority: 11.11.2015 TR 201514182
(43) Date of publication of application: 19.09.2018
(73) Proprietor: Valeo Otomotiv Sanayi ve Ticaret A.S., 34854 Istanbul (TR)
(72) Inventor: KONAKCI, Suleyman, 16240 Bursa (TR); GUL, Cihat, 16240 Bursa (TR); SEVINGUL, Burak-Huseyin, 16240 Bursa (TR)
(74) Representative: Cardon, Nicolas
(86) International application number: PCT/EP2016/077154
(87) International publication number: WO 2017/081089

(56) References cited:
- EP-A2- 2 434 176
- WO-A1-96/10704
- FR-A- 1 445 551
- GB-A- 2 207 734
- US-A1- 2004 211 643

## Description

### TECHNICAL FIELD

The present invention relates to vibration dampeners, particularly in hybrid vehicles, which are used on the torque fluctuation absorbers which prevent the transmission of the torque to the transmission units when the engine exceeds a predetermined torque value, and said vibration dampeners arrange transmission of the rotation, applied by the engine, to the powertrain units.

### PRIOR ART

The subject matter vibration dampeners are used in transmission of the movement, applied particularly on torque fluctuation absorbers by the engine in vehicles, to the powertrain units. Accordingly, the movement, applied by the engine, is transmitted to the retainer plates from a drive plate. Thanks to the friction linings connected to the retainer plates, when the torque exceeds a predetermined value, the friction linings slip and the excessive torque is prevented from being transmitted to the powertrain units. The transmission of the movement from the drive plate to the retainer plates is realized by means of the springs positioned in between therein. Thus, first of all, the drive plate compresses the springs, and the transmission of the movement to the retainer plates in a harsh manner is prevented. When the springs are substantially compressed, the drive plate is stopped onto the pins extending between the retainer plates, and the movement is transmitted.

In the torque fluctuation absorber disclosed in the application US2010243400, there is a resilient member positioned inside springs for providing smoothing of the movement transmission when the springs are compressed. Thus, when the springs are substantially compressed, the drive plate compresses the resilient member. However, in said embodiment, since the resilient member is positioned in a free manner inside the spring, the resilient member is compressed between the windings of the spring, and the resilient member can change form, and its characteristic can change. US 2004/211643 A1 discloses a vibration dampener according to the preamble of claim 1.

As a result, because of all of the abovementioned problems, an improvement is required in the related technical field.

### BRIEF DESCRIPTION OF THE INVENTION

The present invention relates to a vibration dampener, for eliminating the above mentioned disadvantages and for bringing new advantages to the related technical field.

The main object of the present invention is to provide a vibration dampener where the movement transmission from the engine to the powertrain units is smoothed.

Another object of the present invention is to provide a vibration dampener where the noises occurring during operation are reduced.

In order to realize all of the abovementioned objects and the objects which are to be deducted from the detailed description below, the present invention is a vibration dampener, for transmitting the propulsion, applied by the engine, to the transmission units in vehicles, and comprising at least one drive plate, at least one retainer plate positioned in the vicinity in a substantially parallel manner to said drive plate, at least one spring positioned inside at least one each spring housings provided on the drive plate and the retainer plate, at least one pin extending through the retainer plate towards the drive plate, at least one stop surface provided on the drive plate and which stops to said pin when the drive plate is rotated at a pre-calculated amount. Accordingly, said vibration dampener comprises at least one elastomer piece positioned between said stop surface and impact surface facing the stop surface of the pin. Thus, after the drive plate rotates a predetermined amount, the stop surface hits the elastomer piece before the pin. Thanks to this, since metal does not hit metal directly, the vibrations are reduced and at the same time, the noise occurring is reduced.

In a preferred embodiment of the invention, said elastomer piece is fixed onto the pin. Thus, the elastomer piece stays fixed without being affected by the movement of the drive plate.

In another preferred embodiment of the invention, the elastomer piece is provided on at least one elastomer wedge which at least partially encircles the pin. Thus, the elastomer wedge is fixed onto the pin like a sheath, and thereby, fixation of the elastomer piece is facilitated.

According to the invention, at least two pins, namely at least one first pin and at least one second pin, are provided on the retainer plate and the first pin and the second pin are configured in a manner contacting the stop surface in different times.

In another preferred embodiment of the invention, the elastomer piece is provided between the first pin or the second pin and the stop surface. Thus, the stop surface contacts the elastomer piece firstly, and after the elastomer piece is substantially compressed, the other stop surface is stopped to the other pin. Therefore, the elastomer piece is prevented from being excessively compressed and damaged.

In another preferred embodiment of the invention, the connection of the elastomer piece onto the pin is provided by means of a support spring. Thus, some of the forces exerted on the elastomer piece is dampened by the support spring.

In another preferred embodiment of the invention, the support spring is provided in a form which partially encircles the pin.

In another preferred embodiment of the invention, inside the spring housing, spring holder is provided on at least one each ends of the springs.

In another preferred embodiment of the invention, the elastomer piece is provided as an extension of the spring holder extending towards the stop surface.

### BRIEF DESCRIPTION OF THE FIGURES

In Figure 1, 2 and 3, the representative views of the subject matter vibration dampener are given.

In Figure 4 and 5, the representative views of the alternative embodiments of the subject matter vibration dampener are given.

### REFERENCE NUMBERS

10 Vibration dampener
20 Drive plate
21 Drive arm
22 Stop surface
23 Movement gap
30 Retainer plate
31 Pin
31a First pin
31b Second pin
32 Impact surface
40 Spring housing
41 Spring
50 Spring holder
60 Elastomer wedge
61 Elastomer piece
70 Support spring

### DETAILED DESCRIPTION OF THE INVENTION

In this detailed description, the subject matter vibration dampener (10) is explained with references to examples without forming any restrictive effect only in order to make the subject more understandable.

The subject matter vibration dampener (10) is used for transmission of the movement, applied by the engine, to the powertrain units. In more details, the application of the subject matter vibration dampener (10) onto a torque limiter is described.

The vibration dampener (10) essentially has at least one drive plate (20), at least one retainer plate (30) provided in the vicinity of said drive plate (20) and at least one spring (41) providing connection of said retainer plate (30) and the drive plate (20) in order to transmit the movement, applied by the motor, to the powertrain units.

In more details, the drive plate (20) has a circular form. There is at least one spring housing (40) provided on the drive plate (20). Said spring housing (40) is essentially provided between the drive arms (21) extending outwardly from the center of the drive plate (20). The faces of the drive arms (21) facing each other define one each stop surface (22). The gap between said stop faces (22) is defined as a movement gap (23).

Preferably two retainer plates (30) are provided. Accordingly, the retainer plates (30) are positioned such that there is one each retainer plate (30) at the two sides of the drive plate (20). The retainer plates (30) are connected to each other by means of pins (31). Thus, the drive plate (20) is positioned between the retainer plates (30). The drive plate (20) and the retainer plates (30) are concentrically positioned. The pins (31), extending between the retainer plates (30), pass through the movement gaps (23) of the drive plate (20). On the retainer plates (30), there are preferably spring housings (40) with equal size and number as the spring housing (40) provided on the drive plate (20). Thus, a spring (41), positioned inside the spring housings (40), can be connected to the retainer plates (30) and to the drive plate (20) simultaneously from the two sides. In the preferred embodiment of the present invention, there are spring holders (50) provided at the two ends of the spring (41). Said spring holders (50) are preferably made of an elastomer material. Thus, the spring (41) is prevented from directly contacting the retainer plates (30) and the drive plate (20) and from leading to noise.

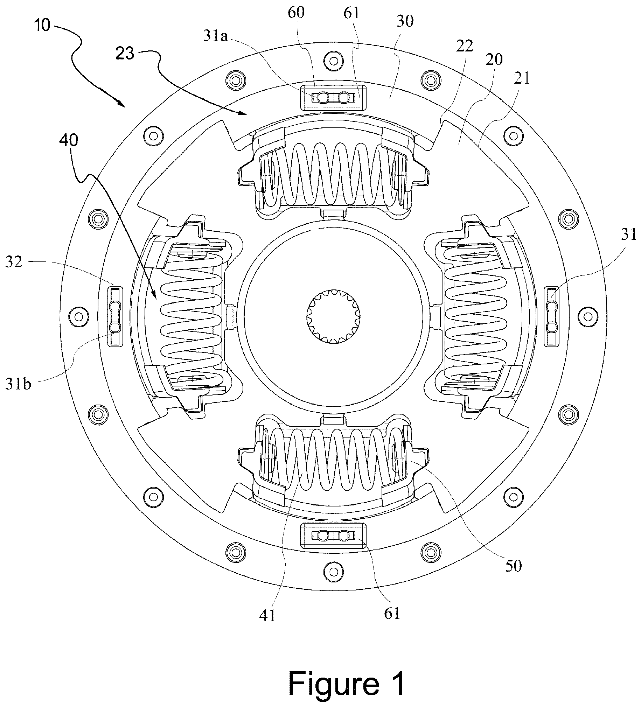

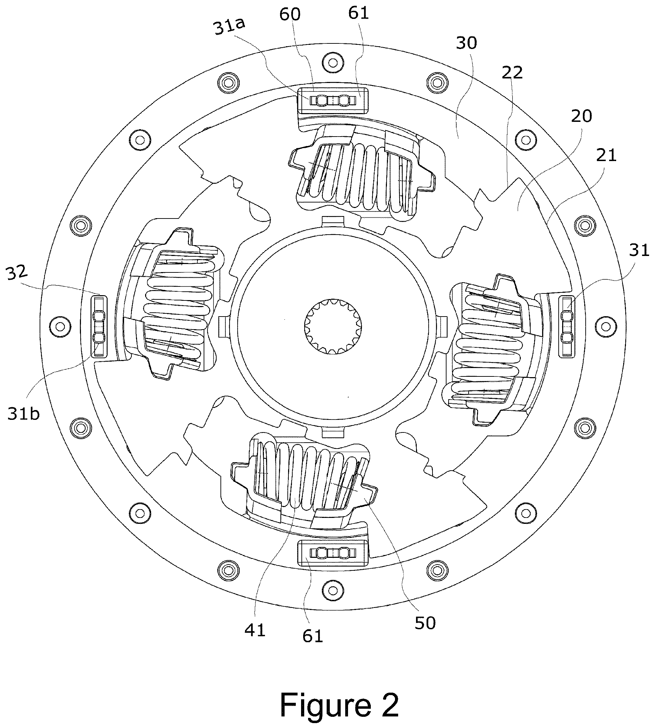

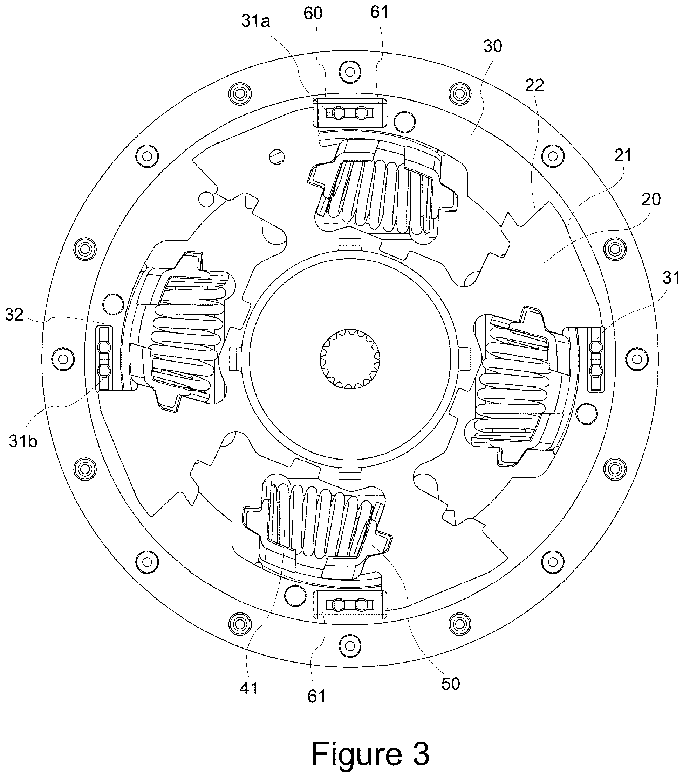

With reference to Figure 1, at least two pins (31), namely at least one first pin (31a) and at least one second pin (31b), extend between the retainer plates (30). In the preferred embodiment of the present invention, there is at least one elastomer piece (61) positioned between the impact surface (32) of the first pin (31a) and the stop surface (22). Said elastomer piece (61) at least partially covers the impact surface (32). In a possible embodiment of the present invention, the elastomer piece (61) is provided on an elastomer wedge (60) which at least partially encircles the periphery of the first pin (31a). In other words, the elastomer wedge (60) is fixed onto the first pin (31a) in a sheath-like manner. Accordingly, the sides of the elastomer wedge (60) facing the stop surfaces (22) are defined as elastomer piece (61). In a possible embodiment of the present invention, while the elastomer wedge (60) is provided on the first pin (31a), there is not elastomer wedge (60) on the second pin (31b). In said embodiment, the second pin (31b) is provided in a wider manner than the first pin (31a). In other words, the pin width of the first pin (31a) is smaller than the pin width of the second pin (31b). However, together with the elastomer piece (61) connected to the first pin (31a), the total width is greater than the second pin (31b). With reference to Figure 2, when the drive plate (20) is actuated, after the springs (41) are compressed at a predetermined amount, the stop surface (22) provided in the vicinity of the first pin (31a) hits the elastomer piece (61). With reference to Figure 3, when the elastomer piece (61) is compressed at a predetermined amount, another stop surface (22) contacts the second pin (31b). Thus, the first contact of the drive plate (20) to the pins (31) is realized by means of the elastomer piece (61). Moreover, since the drive plate (20) is directly stopped to the second pin (31b) after a while, the elastic wedge is prevented from being damaged as a result of being compressed excessively.

Since the first contact of the drive plate (20) to the retainer plates (30) is realized by means of the elastomer piece (61), the noise of the vibration dampener (10) is reduced. At the same time, since the elastomer piece (61) is compressed like a spring (41), the movement transmission from the drive plate (20) to the retainer plates (30) is smoothed. Thus, the probable vibrations are reduced.

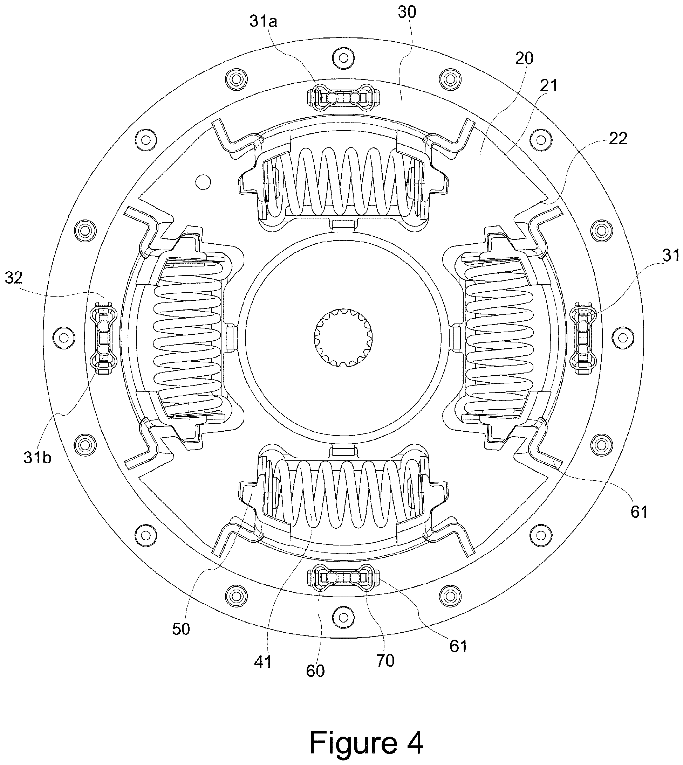

With reference to Figure 4, in another possible embodiment of the present invention, the elastomer piece (61) is connected to the pin (31) by means of a support spring (70). In more details, the support spring (70) at least partially encircles the periphery of the pin (31) such that there is a flexing gap in between. The elastomer piece (61) is positioned in the section of the support spring (70) which is close to the impact surface (32). Thus, the support spring (70) provides the elastomer piece (61) to be connected to the pin (31), and at the same time, it provides the elastomer piece (61) to be supported during impact. The support spring (70) is preferably made of spring (41) steel. In accordance with said embodiment, when the stop surface (22) hits the elastomer piece (61), the support spring (70) dampens some of the impact applied onto the elastomer piece (61), and it prevents the elastomer piece (61) from being damaged. Moreover, by means of the effect of the support spring (70), forces can be dampened which are greater than the dampening effect which will be formed by the elastomer piece (61) only.

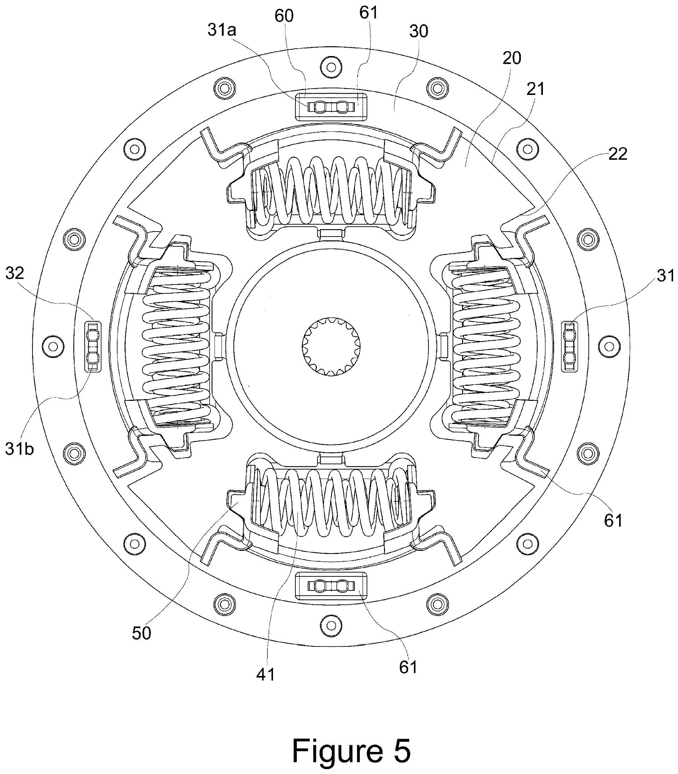

With reference to Figure 5, in another possible embodiment of the present invention, the elastomer piece (61) can be provided as the extension of the spring holder (50). In other words, the elastomer piece (61) is embodied in an integrated manner to the spring holder (50), and the elastomer piece (51) extends in a manner at least partially covering the stop surface (22) of the drive plate (20).

The protection scope of the present invention is set forth in the annexed Claims and cannot be restricted to the illustrative disclosures given above, under the detailed description. It is because a person skilled in the relevant art can obviously produce similar embodiments under the light of the foregoing disclosures, without departing from the main principles of the present invention.

## Claims

1. A vibration dampener (10), for transmitting the propulsion, applied by an engine, to powertrain units in vehicles, and comprising at least one drive plate (20), at least one retainer plate (30) positioned in the vicinity in a substantially parallel manner to said drive plate (20), at least one spring (41) positioned inside at least one each spring housings (40) provided on the drive plate (20) and the retainer plate (30), at least one pin (31, 31a, 31b) extending through the retainer plate (30) towards the drive plate (20), whereby two pins (31, 31a, 31b), namely first pin (31a) and second pin (31b), being provided on the retainer plate (30), said vibration dampener comprising respective stop surfaces (22) provided on the drive plate (20) and which stop to said first and second pins (31a, 31b) when the drive plate (20) is rotated at a pre-calculated amount, said vibration dampener (10) comprising at least one elastomer piece (61) positioned between an impact surface (32) of the pin (31, 31a, 31b) and the stop surface (22), said impact surface facing the stop surface (22), **characterized in that** the first pin (31a) and the second pin (31b) are configured in a manner contacting its respective stop surface (22) in different times.

2. The vibration dampener (10) according to claim 1, wherein said elastomer piece (61) is fixed onto the pin (31, 31a, 31b).

3. The vibration dampener (10) according to claim 2, wherein the elastomer piece (61) is provided on at least one elastomer wedge (60) which at least partially encircles the pin (31, 31a, 31b).

4. The vibration dampener (10) according to claim 1, wherein the elastomer piece (61) is provided between the first pin (31a) or the second pin (31b) and the stop surface (22).

5. The vibration dampener (10) according to claim 1, wherein the connection of the elastomer piece (61) onto the pin (31, 31a, 31b) is provided by means of a support spring (70).

6. The vibration dampener (10) according to claim 5, wherein the support spring (70) is provided in a form which partially encircles the pin (31, 31a, 31b).

7. The vibration dampener (10) according to claim 1, wherein inside the spring housing (40), a spring holder (50) is provided on at least one each ends of the springs (41).

8. The vibration dampener (10) according to claim 7, wherein the elastomer piece (61) is provided as an extension of the spring holder (50) extending towards the stop surface (22).

## Patentansprüche

1. Schwingungsdämpfer (10), zum Übertragen des Antriebs, angewendet durch eine Kraftmaschine, auf Antriebsstrangeinheiten in Fahrzeugen, und umfassend zumindest eine Antriebsplatte (20), zumindest eine Halteplatte (30), positioniert in der Nachbarschaft in einer im Wesentlichen parallelen Weise zu der Antriebsplatte (20), zumindest eine Feder (41), positioniert im Inneren von zumindest jedem der Federgehäuse (40), bereitgestellt auf der Antriebsplatte (20) und der Halteplatte (30), wobei sich zumindest ein Stift (31, 31a, 31b) durch die Halteplatte (30) in Richtung der Antriebsplatte (20) erstreckt, wobei zwei Stifte (31, 31a, 31b), namentlich der erste Stift (31a) und der zweite Stift (31b), an der Halteplatte (30) bereitgestellt sind, wobei der Schwingungsdämpfer entsprechende Anschlagoberflächen (22), bereitgestellt an der Antriebsplatte (20), umfasst, und die an dem ersten und zweiten Stift (31a, 31b) anschlagen, wenn die Antriebsplatte (20) um einen vorab berechneten Betrag gedreht wird, wobei der Schwingungsdämpfer (10) zumindest ein elastomeres Stück (61) umfasst, das zwischen einer Auftreffoberfläche (32) des Stifts (31, 31a, 31b) und der Anschlagoberfläche (22) positioniert ist, wobei die Auftreffoberfläche zur Anschlagoberfläche (22) zeigt, **dadurch gekennzeichnet, dass** der erste Stift (31a) und der zweite Stift (31b) in einer Weise ausgelegt sind, bei der sie zu unterschiedlichen Zeitpunkten mit ihren jeweiligen Anschlagflächen (22) in Kontakt kommen.

2. Schwingungsdämpfer (10) nach Anspruch 1, wobei das elastomere Stück (61) am Stift (31, 31a, 31b) befestigt ist.

3. Schwingungsdämpfer (10) nach Anspruch 2, wobei das elastomere Stück (61) an zumindest einem elastomeren Keil (60) bereitgestellt ist, der den Stift (31, 31a, 31b) zumindest teilweise umschließt.

4. Schwingungsdämpfer (10) nach Anspruch 1, wobei das elastomere Stück (61) zwischen dem ersten Stift (31a) oder dem zweiten Stift (31b) und der Anschlagoberfläche (22) bereitgestellt ist.

5. Schwingungsdämpfer (10) nach Anspruch 1, wobei die Verbindung des elastomeren Stückes (61) auf dem Stift (31, 31a, 31b) mittels einer Stützfeder (70) bereitgestellt ist.

6. Schwingungsdämpfer (10) nach Anspruch 5, wobei die Stützfeder (70) in einer Form bereitgestellt ist, die den Stift (31, 31a, 31b) zumindest teilweise umschließt.

7. Schwingungsdämpfer (10) nach Anspruch 1, wobei im Inneren des Federgehäuses (40) ein Federhalter (50) an zumindest einem der Ende der Federn (41) bereitgestellt ist.

8. Schwingungsdämpfer (10) nach Anspruch 7, wobei das elastomere Stück (61) als eine Erweiterung des Federhalters (50) bereitgestellt ist, die sich in Richtung der Anschlagoberfläche (22) erstreckt.

## Revendications

1. Amortisseur de vibration (10), pour transmettre la propulsion, appliquée par un moteur, à des groupes motopropulseurs dans des véhicules, et comprenant au moins une plaque d'entraînement (20), au moins une plaque de retenue (30) positionnée dans le voisinage de manière sensiblement parallèle à ladite plaque d'entraînement (20), au moins un ressort (41) positionné à l'intérieur de chaque logement de ressort (40) prévus sur la plaque d'entraînement (20) et la plaque de retenue (30), au moins une cheville (31, 31a, 31b) s'étendant à travers la plaque de retenue (30) vers la plaque d'entraînement (20), moyennant quoi deux chevilles (31, 31a, 31b), à savoir une première cheville (31a) et une seconde cheville (31b), sont prévues sur la plaque de retenue (30), ledit amortisseur de vibration comprenant des surfaces de butée respectives (22) prévues sur la plaque d'entraînement (20) et qui se butent sur lesdites première et seconde chevilles (31a, 31b) lorsque la plaque d'entraînement (20) est mise en rotation à une quantité pré-calculée, ledit amortisseur de vibration (10) comprenant au moins une pièce élastomère (61) positionnée entre une surface d'impact (32) de la cheville (31, 31a, 31b) et la surface de butée (22), ladite surface d'impact faisant face à la surface de butée (22), **caractérisé en ce que** la première cheville (31a) et la seconde cheville (31b) sont configurées d'une manière entrant en contact avec leur surface de butée respective (22) à des instants différentes.

2. Amortisseur de vibration (10) selon la revendication 1, dans lequel ladite pièce élastomère (61) est fixée sur la cheville (31, 31a, 31b).

3. Amortisseur de vibration (10) selon la revendication 2, dans lequel la pièce élastomère (61) est prévue sur au moins une cale élastomère (60) qui encercle au moins partiellement la cheville (31, 31a, 31b).

4. Amortisseur de vibration (10) selon la revendication 1, dans lequel la pièce élastomère (61) est prévue entre la première cheville (31a) ou la seconde cheville (31b) et la surface de butée (22).

5. Amortisseur de vibration (10) selon la revendication 1, dans lequel le raccordement de la pièce élastomère (61) sur la cheville (31, 31a, 31b) est fourni au moyen d'un ressort de support (70).

6. Amortisseur de vibration (10) selon la revendication 5, dans lequel le ressort de support (70) est prévu sous une forme qui encercle partiellement la cheville (31, 31a, 31b).

7. Amortisseur de vibration (10) selon la revendication 1, dans lequel, à l'intérieur du logement de ressort (40), un porte-ressort (50) est prévu sur au moins une des extrémités des ressorts (41).

8. Amortisseur de vibration (10) selon la revendication 7, dans lequel la pièce élastomère (61) est prévue sous forme d'extension du porte-ressort (50) s'étendant vers la surface de butée (22).
